# DEMANDE DE BREVET EUROPEEN

(11) **EP 2 453 118 A1**
(43) Date de publication de la demande: **16.05.2012**
(21) Numéro de dépôt: 11189216.2
(22) Date de dépôt: 15.11.2011
(51) Int. Cl.: F01P 5/12, F04D 13/02, F16C 13/02, F16D 27/10

(54) **Mécanisme débrayable d'entraînement entre une courroie et un arbre tournant**

(30) Priorité: 16.11.2010 FR 1004453
(71) Demandeur: NTN-SNR Roulements, 74000 Annecy (FR)
(72) Inventeur: Beauprez, Jean-Michel, 74270 Menthonnex sous Clermont (FR)
(74) Mandataire: Novagraaf Technologies

(57) **Abrégé**

Un mécanisme d'entraînement débrayable (10) comporte un ensemble tournant présentant un chemin de roulement annulaire intérieur (52) définissant un axe géométrique de rotation (30), une bague extérieure formant un chemin de roulement annulaire extérieur (54), et des corps roulants (50) qui roulent sur les chemins de roulement intérieur et extérieur. Un embrayage à électroaimant (62) présente un équipage mobile (60) ayant une partie ferromagnétique en regard et à distance d'entrefer de l'électroaimant, reliée à une surface d'accouplement (72) par un ou plusieurs doigts de guidage traversant une lumière de guidage (52) prévue dans l'ensemble tournant pour guider en translation axiale et solidariser en rotation l'équipage mobile (60) par rapport à l'ensemble tournant, de sorte que l'équipage mobile soit mobile axialement en translation entre une position d'accouplement et une position désaccouplée. La surface de d'accouplement (72) coopère avec une surface correspondante solidaire de la bague extérieure, pour solidariser en rotation la bague extérieure et l'équipage mobile ferromagnétique, La surface d'accouplement (72) et la partie ferromagnétique sont situées axialement de part et d'autre de la lumière.

## Description

### DOMAINE TECHNIQUE DE L'INVENTION

L'invention est relative à un mécanisme d'entraînement débrayable disposé entre un arbre tournant et une courroie, et en particulier, bien que de manière non limitative, à un mécanisme permettant d'entraîner grâce à une courroie une roue à aubes de pompe à eau de véhicule automobile.

### ETAT DE LA TECHNIQUE ANTERIEURE

Dans le document FR 2 901 843 est décrit un mécanisme d'entraînement à courroie permettant notamment d'entraîner grâce à une courroie une roue à aubes de pompe à eau de refroidissement pour un moteur de véhicule automobile. Ce mécanisme est monté sur un bâti formant un canon portant au moins un chemin de roulement intérieur qui définit un axe de rotation. Autour de cet axe tourne un tambour monobloc présentant au moins un chemin de roulement extérieur situé en regard du chemin de roulement intérieur. Le tambour est situé entièrement d'un premier côté d'un plan radial de référence. Il est pourvu d'une bande d'enroulement pour coopérer avec une courroie d'entraînement. Un arbre solidaire d'un ensemble tournant s'étendant d'un deuxième côté du plan géométrique de référence, traverse le canon et est fixé au tambour par des moyens de liaison, s'étendant radialement entre l'arbre et le tambour, et tangents à un plan géométrique qui est perpendiculaire à l'axe de rotation et est situé à plus grande distance du plan transversal de référence que les chemins de roulement. Grâce à l'intégration du chemin de roulement extérieur au tambour de la poulie, ce type de mécanisme offre un volume annulaire important entre les chemins de roulement intérieur et extérieur ce qui permet d'augmenter la taille des corps roulants et avec elle la charge admissible du roulement. Le mécanisme reste compact en direction axiale, du fait que l'on dispose le roulement axialement entre les moyens de liaison de l'arbre au tambour et le bâti.

Ce mécanisme d'entraînement ne permet toutefois pas de découpler l'arbre mené portant la roue à aubes du tambour menant, entraîné par la courroie. Or il s'avère utile, afin d'optimiser l'énergie consommée par la fonction refroidissement, de pouvoir débrayer la roue à aubes.

On connaît par ailleurs des pompes à eau débrayables. Dans le document US 6 915 887 est ainsi décrit un mécanisme d'entraînement d'une pompe à eau de refroidissement de moteur à combustion interne, pourvu d'un embrayage principal à friction à commande électromagnétique pour accoupler une poulie à un arbre solidaire de la roue à aubes de la pompe à eau, et d'un embrayage auxiliaire à courants de Foucault qui prend le relai de l'embrayage principal pour faire tourner l'arbre à une vitesse inférieure à la vitesse de la poulie, par glissement progressif contrôlé. L'embrayage principal et l'embrayage auxiliaire sont situés radialement à l'extérieur du roulement de guidage de la poulie. La masse ajoutée par l'ensemble de l'embrayage est importante et augmente considérablement le moment d'inertie. Le roulement est de faible diamètre, et n'accepte donc qu'une charge relativement faible, alors même que le moment d'inertie ajouté par l'embrayage sollicite le roulement. L'électroaimant est également situé radialement à l'extérieur du roulement, au détriment de la compacité du dispositif.

### EXPOSE DE L'INVENTION

L'invention vise à remédier aux inconvénients de l'état de la technique et notamment à réaliser de manière simple et fiable un mécanisme débrayable d'entraînement entre une courroie et un ensemble tournant, qui soit de faible encombrement.

A cet effet, l'invention a pour objet un mécanisme d'entraînement débrayable comportant :
- un ensemble tournant présentant un chemin de roulement annulaire intérieur définissant un axe géométrique de rotation, l'ensemble tournant présentant au moins une lumière traversante parallèle à l'axe géométrique de rotation,
- une bague extérieure formant un chemin de roulement annulaire extérieur,
- des corps roulants qui roulent sur les chemins de roulement intérieur et extérieur,
- un embrayage à commande électromagnétique comportant :
   - au moins un électroaimant de commande,
   - une première surface de contact solidaire de la bague extérieure, et
   - un équipage mobile présentant :
      - au moins une partie ferromagnétique en regard et à distance d'entrefer de l'électroaimant,
      - au moins un doigt de guidage traversant la lumière de guidage pour guider en translation axiale et solidariser en rotation l'équipage mobile par rapport à l'ensemble tournant de sorte que l'équipage mobile soit mobile axialement en translation par rapport à l'ensemble tournant entre une position d'accouplement et une position désaccouplée, et
      - au moins une deuxième surface de contact coopérant avec la première surface de contact en position d'accouplement pour solidariser en rotation la bague extérieure et l'équipage mobile ferromagnétique, la deuxième surface de contact et la partie ferromagnétique étant situées axialement de part et d'autre de la lumière.

Grâce à la coopération entre le doigt de guidage et la lumière dans laquelle il coulisse, il est possible d'interposer la partie de l'organe intérieur portant le chemin de roulement intérieur entre l'électroaimant et les surfaces de contact de l'embrayage, ce qui contribue à la compacité de l'ensemble.

L'embrayage à commande électromagnétique peut être à friction ou à crabotage.

Préférentiellement, l'ensemble tournant comporte un arbre coaxial avec l'axe de rotation, les chemins de roulement intérieur et extérieur étant entièrement situés entre un premier et un deuxième plans de référence perpendiculaires à l'axe de rotation, le premier et le deuxième plans de référence étant situés entre une extrémité de l'arbre et la première surface de contact. L'extrémité de l'arbre en question peut être liée à un organe menant, par exemple un moteur électrique ou un motoréducteur, ou à un organe mené, par exemple un ensemble tournant de pompe à eau.

Avantageusement, le chemin de roulement intérieur peut être formé soit directement sur l'arbre soit, et de manière préférentielle, sur une bague intérieure rapportée sur l'arbre. Dans ce dernier cas, la lumière assurant le guidage en translation axiale et une solidarisation en rotation de l'équipage mobile ferromagnétique par rapport à la bague intérieure peut être intégrée à la bague intérieure.

Le mécanisme peut comporter en outre un palier coaxial avec l'axe de rotation et présentant au moins un chemin de roulement fixe, un chemin de roulement tournant et des corps roulants cheminant sur les chemins de roulement tournant et fixe, le chemin de roulement fixe étant apte à être solidarisé à un bâti et le chemin de roulement tournant étant solidaire de l'organe tournant ou de la bague extérieure. Ainsi est défini le guidage en rotation du mécanisme par rapport au référentiel fixe du bâti.

Le palier peut constituer l'unique liaison de guidage en rotation du mécanisme par rapport au bâti. Le mécanisme constitue alors avec l'arbre et l'ensemble tournant un sous-ensemble qui peut être assemblé puis monté sur le bâti. Alternativement, il peut exister deux paliers, distants axialement l'un de l'autre.

Suivant un mode de réalisation, le palier est situé axialement entre l'ensemble tournant et le chemin de roulement intérieur, entre le premier et le deuxième plans de référence.

L'électroaimant est préférentiellement solidaire du bâti, ce qui simplifie son alimentation électrique.

Le chemin de roulement tournant est préférentiellement solidaire de la bague extérieure et situé radialement à l'extérieur du chemin de roulement fixe.

Suivant un mode de réalisation, le bâti forme un canon creux traversé par l'arbre, le chemin de roulement fixe étant formé sur le canon ou sur une bague fixe rapportée sur le canon. Une garniture d'étanchéité peut être prévue entre le canon et l'arbre, située axialement entre l'ensemble tournant et l'électroaimant.

Préférentiellement, l'embrayage à commande électromagnétique comporte un ressort de rappel de l'équipage mobile ferromagnétique en position d'accouplement. Ainsi, en cas de défaillance de l'électroaimant, le mode dégradé de fonctionnement est-il un mode accouplé. Ceci est particulièrement important si le mécanisme sert à l'entraînement d'une roue à aubes de circuit de refroidissement ou est destiné à l'entraînement de tout autre mécanisme de sécurité qui doit par défaut être entraîné.

On peut toutefois envisager un ressort de rappel de l'équipage mobile en position désaccouplée, si le mode dégradé de fonctionnement souhaité est un mode désaccouplé.

Préférentiellement, le mécanisme comporte en outre un tambour de poulie présentant une surface d'enroulement pour coopérer avec une courroie de transmission, la surface d'enroulement étant située entre les premier et deuxième plans de référence, le tambour de poulie faisant partie intégrante de la bague extérieure ou étant fixé à la bague extérieure. Le mécanisme ainsi défini peut transmettre un couple ou un mouvement imprimé par une courroie motrice entraînant le tambour à l'arbre mené solidaire de l'ensemble tournant, par exemple une roue à aubes d'un circuit de refroidissement, par exemple de moteur à combustion interne. Inversement, il peut transmettre le couple ou le mouvement de l'arbre menant entraîné par l'ensemble tournant au tambour entraînant la courroie. Le terme « courroie » est ici utilisé de façon générique, pour désigner une boucle souple fermée sur elle-même, qui peut être constituée d'une bande continue, avec ou sans reliefs, de profil quelconque, ou d'une chaîne.

Le chemin de roulement tournant peut être formé soit directement sur le tambour, soit sur une bague tournante rapportée sur le tambour.

De manière analogue, le chemin de roulement extérieur peut faire partie intégrante du tambour monobloc, ce qui va dans le sens d'une minimisation du nombre de pièces et d'une optimisation des chaînes de cotes.

On peut également prévoir que la première surface de contact fasse partie intégrante du tambour mais dans ce cas, le chemin de roulement extérieur sera de préférence formé sur une bague extérieure rapportée sur le tambour, pour des raisons de faisabilité. Dans de nombreuses applications, on préférera toutefois prévoir une pièce, par exemple une coupelle, formant la première surface de contact et rapportée sur le tambour. On pourra par exemple associer les deux pièces par sertissage ou par le procédé d'assemblage décrit dans le document EP 1 935 528.

Préférentiellement, l'électroaimant est disposé radialement à l'intérieur du chemin de roulement intérieur ce qui permet de minimiser l'encombrement axial, tout en maximisant le diamètre du roulement, ce qui permet notamment d'augmenter la charge et durée de vie, et offre une la qualité du guidage optimisée.

Selon un autre aspect de l'invention, celle-ci a trait à un mécanisme d'entraînement débrayable comportant :
- un roulement comportant au moins un chemin de roulement intérieur, un chemin de roulement extérieur, et des corps roulants qui roulent sur les chemins de roulement intérieur et extérieur, le roulement définissant un axe géométrique de rotation et étant entièrement situé entre un premier et un deuxième plans de référence perpendiculaires à l'axe de rotation,
- un tambour monobloc solidaire du chemin de roulement extérieur, le tambour étant situé entièrement entre le premier et le deuxième plans géométriques,
- une bande d'enroulement solidaire du tambour, pour coopérer avec une courroie d'entraînement,
- un arbre solidaire du chemin de roulement intérieur et d'un ensemble tournant s'étendant d'un côté du premier plan géométrique de référence opposé au deuxième plan géométrique de référence; et
- un embrayage à commande électromagnétique comportant :
   - une première surface de contact solidaire du tambour et tangente ou sécante avec le deuxième plan de référence,
   - un équipage mobile ferromagnétique solidaire en rotation de l'arbre et mobile axialement en translation entre une position d'accouplement avec le tambour et une position désaccouplée, l'équipage mobile ferromagnétique présentant une deuxième surface de contact coopérant avec la première surface de contact en position d'accouplement pour solidariser en rotation le tambour et l'équipage mobile ferromagnétique, et
   - un électroaimant de commande de l'équipage mobile ferromagnétique, l'électroaimant de commande étant situé radialement à l'intérieur du chemin de roulement intérieur et axialement entre les premier et deuxième plans de référence.

Le mécanisme ainsi défini peut transmettre un couple ou un mouvement imprimé par une courroie motrice entraînant le tambour à l'arbre mené solidaire de l'ensemble tournant, par exemple une roue à aubes d'un circuit de refroidissement. Inversement, il peut transmettre le couple ou le mouvement de l'arbre menant entraîné par l'ensemble tournant au tambour entraînant la courroie.

Suivant un autre aspect de l'invention, celle-ci a pour objet un mécanisme d'entraînement comportant :
- un roulement comportant au moins un chemin de roulement intérieur, un chemin de roulement extérieur, et des corps roulants qui roulent sur les chemins de roulement intérieur et extérieur, le roulement définissant un axe géométrique de rotation et étant entièrement situé entre un premier et un deuxième plans de référence perpendiculaires à l'axe de rotation,
- un tambour monobloc solidaire de la bague extérieure, le tambour étant situé entièrement entre le premier et le deuxième plans géométriques,
- une bande d'enroulement solidaire du tambour, pour coopérer avec une courroie d'entraînement,
- un arbre solidaire de la bague intérieure et d'un ensemble tournant (36) s'étendant d'un côté du premier plan géométrique de référence opposé au deuxième plan géométrique de référence; et
- un embrayage à commande électromagnétique comportant
   - une première surface de contact solidaire du tambour et tangente ou sécante avec le deuxième plan de référence,
   - un équipage mobile ferromagnétique, mobile axialement en translation entre une position d'accouplement avec le tambour et une position désaccouplée et solidaire en rotation de l'arbre, l'équipage mobile ferromagnétique présentant une deuxième surface de contact coopérant avec la première surface de contact en position d'accouplement pour solidariser en rotation le tambour et l'équipage mobile ferromagnétique l'équipage mobile ferromagnétique étant situé radialement à l'intérieur du chemin de roulement intérieur et
   - un électroaimant de commande de l'équipage mobile ferromagnétique.

L'équipage mobile ferromagnétique a vocation à tourner avec la bague intérieure. Il s'agit d'une pièce d'une masse non négligeable du fait de la présence d'un matériau ferromagnétique. Son positionnement à l'intérieur du chemin de roulement intérieur permet de minimiser le moment d'inertie de l'ensemble des parties tournantes du mécanisme, ce qui est particulièrement avantageux dans les phases de variation de vitesse, notamment au démarrage.

L'électroaimant est de préférence disposé axialement en regard du ou des pièces ferromagnétiques de l'équipage mobile, entre les premier et deuxième plans de référence.

Selon un mode de réalisation préféré, le roulement est disposé axialement entre la première surface de contact et l'électroaimant.

### BREVE DESCRIPTION DES FIGURES

D'autres caractéristiques, détails et avantages de l'invention ressortiront à la lecture de la description qui suit, en référence aux figures annexées, qui illustrent :
- la figure 1 une vue en coupe axiale d'un mécanisme selon un premier mode de réalisation de l'invention, en position d'accouplement ;
- la figure 2, une vue du mécanisme de la figure 1, en position transitoire de synchronisation ;
- la figure 3, une vue du mécanisme de la figure 1, en position désaccouplée ;
- la figure 4, une vue en coupe axiale d'un mécanisme selon un deuxième mode de réalisation de l'invention, en position d'accouplement ;
- la figure 5, une vue en coupe axiale d'un mécanisme selon un troisième mode de réalisation de l'invention, en position d'accouplement ;
- la figure 6, une vue en coupe axiale d'un mécanisme selon un quatrième mode de réalisation de l'invention, en position d'accouplement ;
- la figure 7, une vue en coupe axiale d'un mécanisme selon un cinquième mode de réalisation de l'invention, en position d'accouplement ;
- la figure 8, une vue en coupe axiale d'un mécanisme selon un sixième mode de réalisation de l'invention, en position d'accouplement ;
- la figure 9, une vue en coupe axiale d'un mécanisme selon un septième mode de réalisation de l'invention, en position d'accouplement.

Pour plus de clarté, les éléments identiques ou similaires des différents modes de réalisation seront repérés par des signes de référence identiques sur l'ensemble des figures. Leur description ne sera pas systématiquement répétée d'un mode de réalisation à l'autre.

### DESCRIPTION DETAILLEE D'UN MODE DE REALISATION

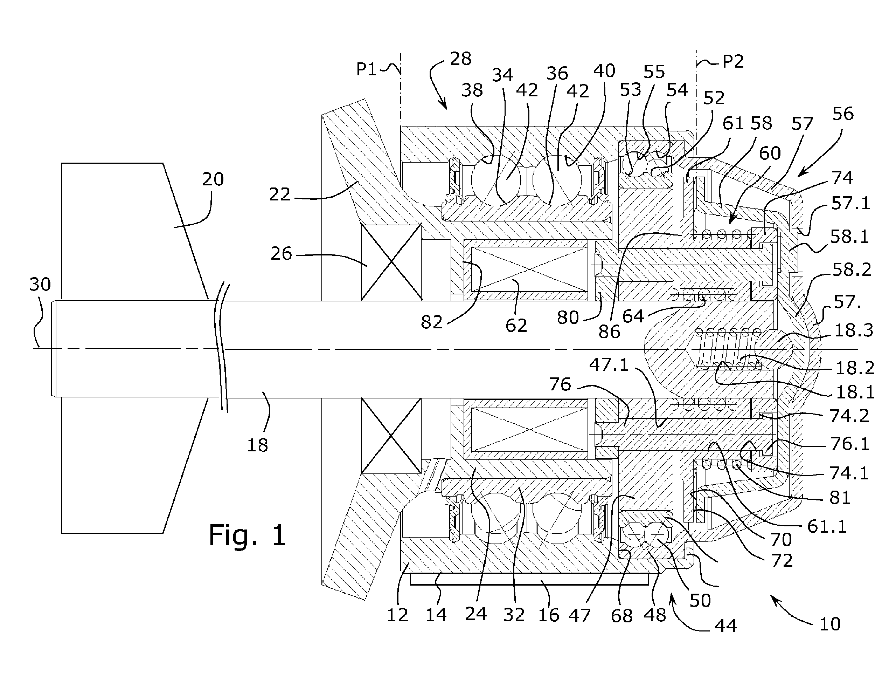

Les figures 1 à 3 illustrent un mécanisme 10 d'entraînement de pompe de circuit de refroidissement d'un moteur à combustion interne dont l'organe d'entrée est constitué par un tambour monobloc 12 qui intègre une bande d'enroulement cylindrique lisse 14 entraînée par une courroie 16 et dont l'organe de sortie est constitué par un arbre 18, sur lequel est fixé une roue à aubes 20. Un bâti 22 constitué par un carter du circuit de refroidissement sépare la roue à aubes 20 du tambour 12. Le bâti 22 forme un canon 24 creux traversé par l'arbre mené 18 et fermé par une garniture d'étanchéité 26.

Un palier à roulement 28 assure le guidage en rotation, sans translation, du tambour 12 par rapport au bâti 22 autour d'un axe de rotation 30. Ce palier 28 est constitué d'une bague intérieure fixe 32 à deux chemins de roulements 34, 36 emmanchée sur le canon 24, et de deux chemins de roulement tournants 38, 40 formés directement sur le tambour 12, entre lesquels circulent des corps roulants 42 répartis en deux rangées. Dans l'exemple de réalisation, les corps roulants 42 sont des billes, qui ont le même diamètre pour les deux rangées. Les chemins de roulement 34, 36, 38, 40 sont de préférence conformés de façon à ce que chaque rangée soit à contact oblique, les angles de contact des deux rangées étant opposés de manière à supporter des charges axiales bidirectionnelles.

Un roulement 44 assure le guidage en rotation, sans translation, de l'arbre 18 par rapport au tambour 12, et le maintien de l'arbre 18. Ce roulement 44 est constitué d'une bague intérieure 46 solidarisé à un plateau 47 emmanché sur l'arbre 18, d'une bague extérieure 48 solidaire du tambour 12 et de corps roulants 50, en l'occurrence des billes, circulant sur des chemins de roulement intérieurs 52, 53 et extérieurs 54, 55 formés sur les bagues 46, 48.

Un embrayage à commande électromagnétique 56 permet d'accoupler ou de désaccoupler l'arbre 18 et le tambour 12. Cet embrayage à commande électromagnétique est constitué d'un couvercle 57 solidaire du tambour 12 et fermant ce dernier, d'une coupelle 58 solidaire du couvercle 57, d'un équipage mobile 60 à crabot 61, d'un électroaimant de commande 62 et d'un ressort de rappel 64.

Le couvercle 57 est serti à l'extrémité du tambour 12 en appui sur la bague extérieure 48, un rabat de matière 66 venant pincer le couvercle 57 et la bague extérieure 48 contre un épaulement 68 du tambour. Le couvercle 57 est pourvu d'une ou plusieurs lumières 57.1, dans lesquelles viennent s'insérer autant de doigts d'accouplement 58.1 de la coupelle 58, assurant une solidarisation en solidarisation en rotation de la coupelle 58 par rapport au couvercle 57. Par ailleurs, le couvercle 57 présente une coupole hémisphérique 57.2 centrée sur l'axe 30, coopérant avec une protubérance de forme correspondante 58.2 formée sur la coupelle 58. Un alésage 18.1 est pratiqué à l'extrémité de l'axe 18 en regard de la coupelle 58, pour recevoir un ressort à boudin 18.2 travaillant en compression et pour guider une bille 18.3 qui vient en appui centré sur la coupelle 58, afin de maintenir la protubérance 58.2 en appui contre la coupole hémisphérique 57.2 et d'assurer que les doigts 58.1 de la coupelle restent en prise dans les lumières 57.1.

La coupelle 58 est par ailleurs pourvue d'une surface de contact 70 comportant des aspérités, en regard d'une surface de contact 72 correspondante du crabot 61, également pourvue d'aspérités, pour assurer un accouplement positif dans la position d'accouplement de la figure 1.

Le crabot 61 est interposé entre le plateau 47 et une couronne de synchronisation 74, ces trois pièces étant rendues solidaires les unes des autres en rotation autour de l'axe 30 par l'intermédiaire de tiges 76. Ces tiges 76 essentiellement cylindriques traversent des lumières de guidage alignées 74.1, 61.1 et 47.1 prévues à cet effet dans la couronne de synchronisation 74, le crabot 61 et le plateau 47. Chaque tige 76 est pourvue d'une tête 76.1 qui vient se loger dans un chambrage correspondant de la couronne de synchronisation 74, en appui sur un épaulement 74.2 au fond de ce chambrage. Les extrémités des tiges sont filetées et vissées dans des trous filetés d'une rondelle ferromagnétique 80 située directement en regard et à distance d'entrefer de l'électroaimant 62. Le ressort de rappel 64 est un puissant ressort de compression en appui sur le crabot 61 et sur le plateau 47, pour rappeler le crabot 61 en position de contact avec la coupelle 58. Un ressort de synchronisation 81 à boudin antagoniste plus faible est interposé entre le crabot 61 et la couronne de synchronisation 74.

L'électroaimant 62 est logé dans un chambrage 82 aménagé dans le canon 24 du bâti, radialement à l'intérieur des chemins de roulements 34, 36, 52 du palier et du roulement.

Pour décrire synthétiquement le positionnement axial des éléments du mécanisme, on peut définir un premier plan géométrique de référence fixe P1, perpendiculaire à l'axe de rotation 30 et un deuxième plan géométrique de référence fixe P2, parallèle au premier, les deux plans étant situés de part et d'autre du tambour 12, le premier plan P1 séparant le tambour 12 de l'extrémité de l'arbre 18 située à l'intérieur du carter 22 et destinée à porter la roue à aube 20, le deuxième plan P2 étant sécant ou tangent avec la première surface de contact 70. L'électroaimant 62 se trouve situé entre les plans P1 et P2.

Radialement, le mécanisme est préférentiellement dimensionné de façon à ce que le chemin de roulement intérieur 52 du roulement 44 présente un diamètre minimal de fond de chemin qui soit supérieur au plus grand diamètre de l'électroaimant et au diamètre hors tout de l'équipage mobile ferromagnétique 56.

En l'absence d'alimentation de l'électroaimant 62, le ressort 64 maintient la surface de contact 72 du crabot 61 en appui contre la surface de contact 70 de la coupelle 58 comme illustré sur la figure 1. L'arbre 18 est alors accouplé au tambour 12, par l'intermédiaire du plateau 47, de l'équipe mobile 60, de la coupelle 58 et du couvercle 57.

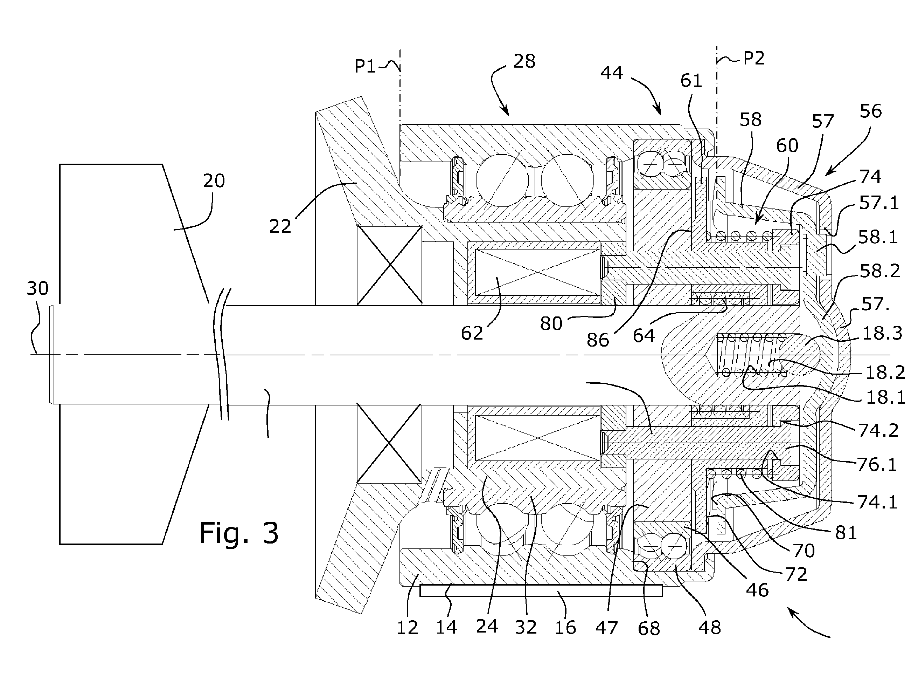

En cas d'alimentation de l'électroaimant, la rondelle ferromagnétique 80 de l'équipage mobile 60 est attirée vers l'électroaimant 62 et entraîne l'équipage mobile 60 jusqu'à atteindre la position de désaccouplement de la figure 3, qui est déterminée par la venue en butée d'un épaulement intérieur 86 du crabot contre la bague intérieure 46, un espacement étant préservé entre la rondelle ferromagnétique 80 et l'électroaimant 62. Les surfaces de contact 70, 72 étant éloignées l'une de l'autre, l'arbre 18 est désaccouplé du tambour 12.

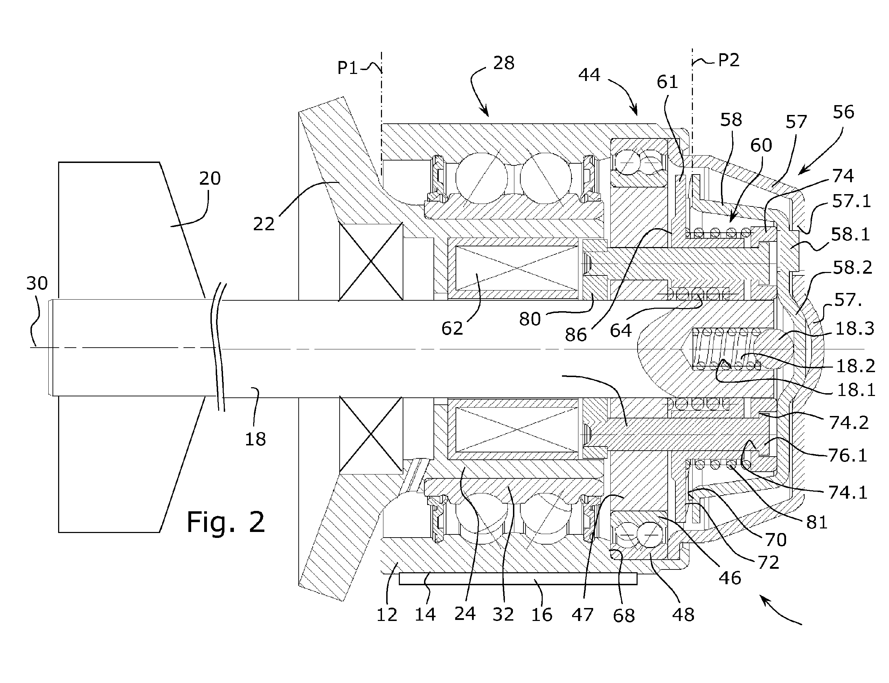

Dès que l'alimentation électrique de l'électroaimant cesse, le ressort 64 se détend en entraînant le crabot jusqu'à une position intermédiaire d'accostage entre les surfaces 70, 72, représentée sur la figure 2. Dans la mesure où la courroie 16 entraîne en rotation la bande d'enroulement 14, le couvercle 57 et la coupelle 58, et où le crabot 61, précédemment solidarisé au bâti 22 par l'intermédiaire de l'électroaimant 62, est encore immobile en rotation, une synchronisation est nécessaire entre les surfaces 70, 72. Dans la position transitoire de la figure 2, les contacts ponctuels entre les surfaces 70, 72 qui ne sont pas encore pleinement engagée l'une avec l'autre s'opposent un moment à la poursuite du mouvement d'engagement du crabot 61. Dans cette phase, le ressort de synchronisation 81 se détend pour entraîner la couronne de synchronisation 74 en appui contre le fond de la coupelle 58. Ce contact frottant permet de réduire rapidement et sans à-coup la vitesse différentielle entre le crabot 61 et la coupelle 58. Dès que la vitesse différentielle est suffisamment réduite pour permettre l'engagement des surfaces 70, 72, le ressort 64 poursuit sa détente et entraîne le crabot 61 jusqu'à la position de la figure 1, tout en comprimant le ressort de synchronisation 81.

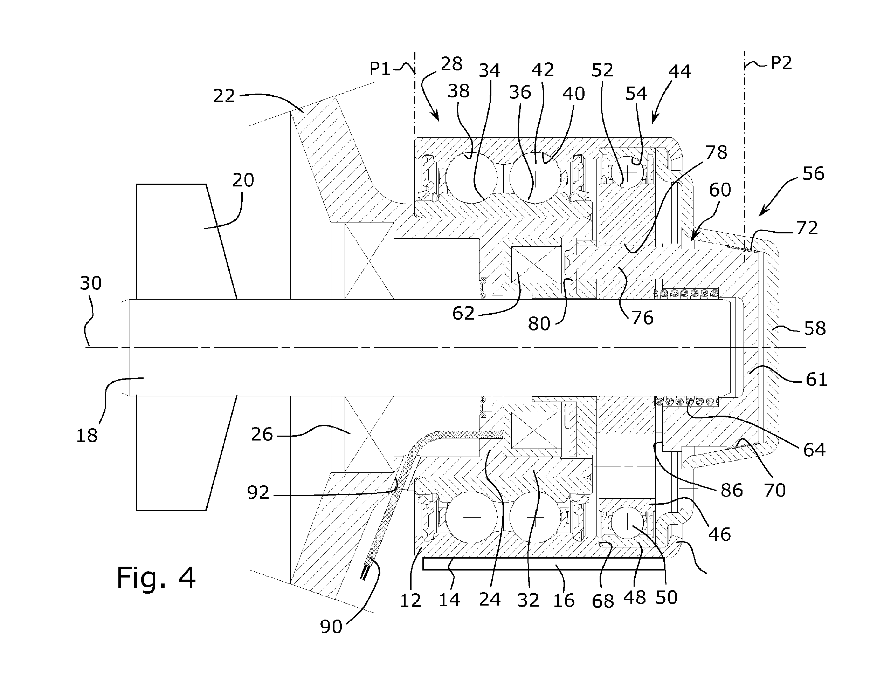

Le mode de réalisation de la figure 4 diffère du précédent essentiellement par la structure de l'embrayage à commande électromagnétique 56, qui est ici à friction et ne nécessite pas d'étage de synchronisation. L'équipage mobile 60 en translation comporte un cône de friction 61, qui présente une surface tronconique 72 de contact avec une surface tronconique 70 correspondante prévue sur la coupelle 58. Le cône de friction 61 est pourvu de plongeurs 76 qui traversent, de façon similaire au premier mode de réalisation, des lumières 78 pratiquées dans la bague intérieure 46, de façon à venir s'atteler sur la rondelle ferromagnétique 80 située en regard de l'électroaimant 62.

Par ailleurs, la bague intérieure 46 présente un plus grand diamètre que dans le premier mode de réalisation, le cercle primitif du roulement ayant un diamètre intermédiaire entre le diamètre de fond de chemin intérieur 34, 36 de la bague fixe 32 et le diamètre de fond de chemin tournant 38, 40 extérieur du palier 28.

On distingue également sur la figure 4 l'alimentation électrique 90 de l'électroaimant 62, ainsi qu'un orifice d'évacuation 92 des éventuelles fuites de liquide de refroidissement.

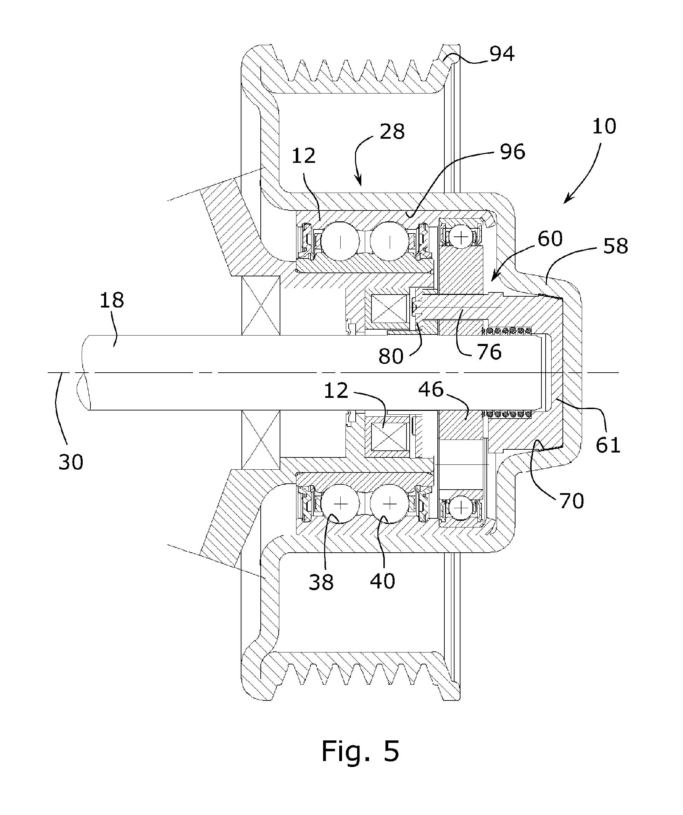

Le mode de réalisation illustré sur la figure 5 diffère du précédent par le fait que la coupelle 58 est partie constituante d'une roue à bande d'enroulement crantée 94 de poulie, qui comporte un chambrage cylindrique 96 dans lequel est monté en force le tambour 12. On peut alors optimiser les matériaux utilisés pour les différentes fonctions, le tambour 12 étant constitué par exemple d'un acier noble ayant subi des traitements thermiques, notamment pour optimiser les caractéristiques de roulement au niveau des chemins de roulements 38, 40, la roue à bande d'enroulement crantée 94 pouvant être fabriquée par exemple en tôle d'aluminium emboutie.

Ce mode de réalisation est particulièrement adapté à une utilisation du mécanisme 10 pour entraîner une courroie crantée à partir de l'arbre 18 qui est menant.

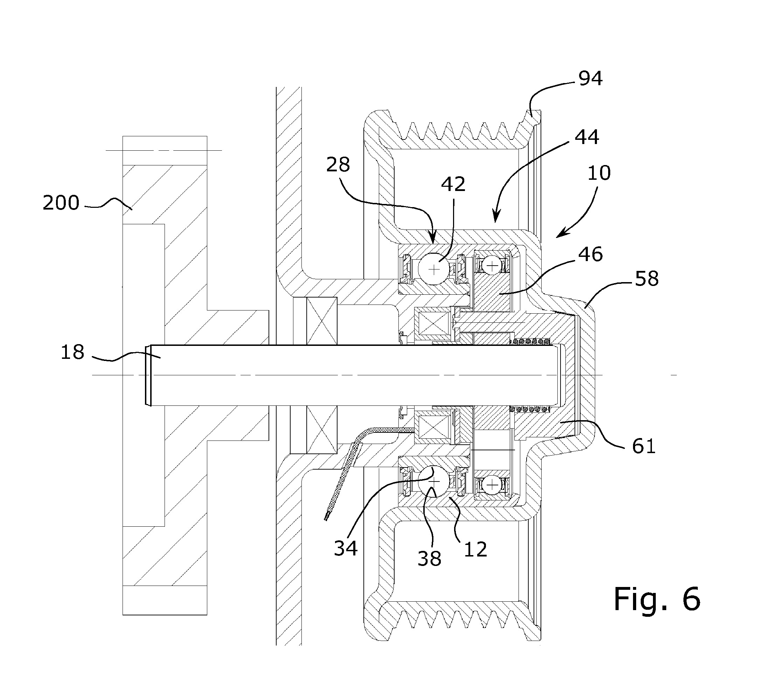

Sur la figure 6 est représentée une variante du dispositif de la figure 5, dont le palier à roulement 28 ne comporte qu'une rangée de corps roulants 42. On a également représenté un pignon 200 d'entraînement de l'arbre 18, pour matérialiser la possibilité d'utiliser le mécanisme 10 pour entraîner la bande d'enroulement 94 à partir de l'arbre 18.

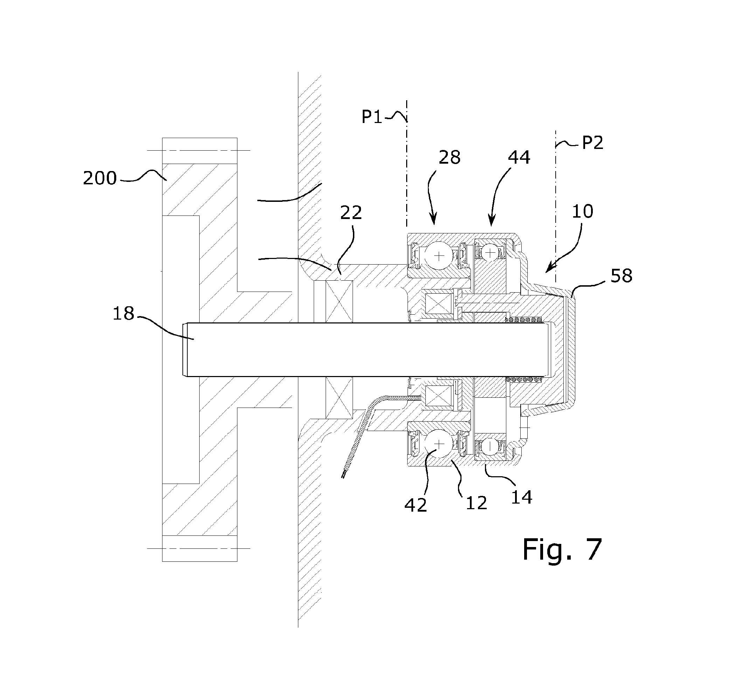

La variante de la figure 7 représente un mode de réalisation du mécanisme qui transmet le couple et le mouvement d'un pignon d'entraînement 200 à une courroie. Ce mécanisme combine des caractéristiques des modes des figures 6 et 4 : la coupelle 58 est rapportée sur le tambour 12, le palier 28 ne comporte qu'une rangée de corps roulants 42.

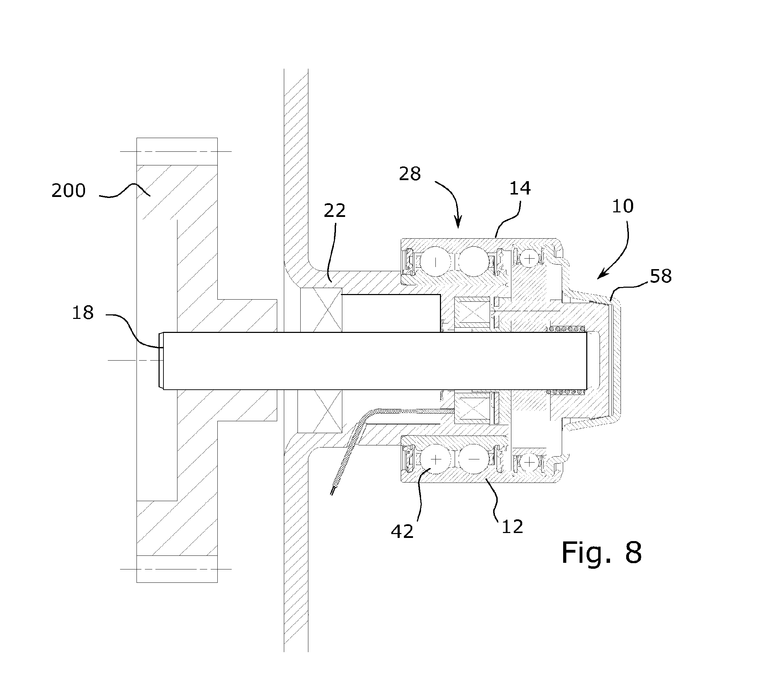

La figure 8 illustre une utilisation du mécanisme de la figure 4 pour l'entraînement du tambour 12 à partir d'un pignon d'entraînement 200.

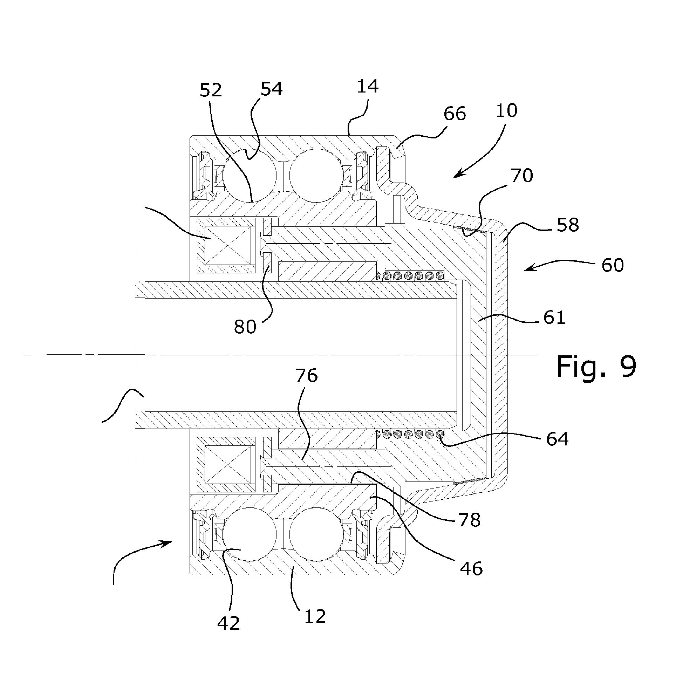

Sur la figure 9 est illustré un mode de réalisation plus spécifiquement destiné à l'entraînement du tambour 12 disposé en bout d'un arbre moteur 18. Ce mode de réalisation se distingue des autres par l'absence de liaison directe entre le mécanisme 10 et un bâti ou carter fixe. On supposera ici que l'arbre moteur 18 est guidé par des paliers non représentés et ne faisant pas partie du mécanisme 10.

Un roulement 44 assure le guidage du tambour 12 par rapport à l'arbre 18 et son maintien. Ce roulement 44 est constitué d'une bague intérieure 46 solidaire de l'arbre 18, la bague extérieure étant intégrée au tambour monobloc 12, les corps roulants 42 circulant sur les chemins de roulement intérieurs 52 et extérieurs 54 formés sur la bague intérieure 46 et le tambour 12.

Un embrayage à commande électromagnétique 56 permet d'accoupler ou de désaccoupler l'arbre 18 et le tambour 12. Cet embrayage à commande électromagnétique 56 est constitué d'un coupelle 58 solidaire du tambour 12 et fermant ce dernier, d'un équipage mobile 60 à cône de friction 61 semblable à celui illustré sur la figure 4, d'un électroaimant de commande 62 solidaire de la bague intérieure 46 et d'un ressort de rappel 64.

Le chemin de roulement intérieur 52 présente un diamètre minimal de fond de chemin qui est supérieur au diamètre de l'électroaimant 62 et au diamètre hors tout de l'équipage mobile 60.

L'alimentation électrique de l'électroaimant depuis l'extérieur peut être effectuée par l'intermédiaire de balais ou par induction.

Suivant des variantes non représentées de ce dernier mode de réalisation, il est possible de fixer l'électroaimant à l'arbre, ou à un élément fixe de bâti.

Différentes variantes sont possibles.

Dans les modes de réalisation des figures 1 à 8, la garniture d'étanchéité peut inclure un roulement de reprise d'effort.

Pour limiter la consommation en position désaccouplée, un aimant permanent peut être disposé à proximité de l'électroaimant et de la rondelle ferromagnétique, pour créer une ventouse magnétique.

## Revendications

1. Mécanisme d'entraînement débrayable (10) comportant :
- un ensemble tournant présentant un chemin de roulement annulaire intérieur (52) définissant un axe géométrique de rotation (30), l'ensemble tournant présentant au moins une lumière traversante parallèle à l'axe géométrique de rotation,
- une bague extérieure (48) formant un chemin de roulement annulaire extérieur (54),
- des corps roulants (50) qui roulent sur les chemins de roulement intérieur et extérieur,
- un embrayage à commande électromagnétique (56) comportant :
- au moins un électroaimant (62) de commande,
- une première surface de contact (70) solidaire de la bague extérieure, et
- un équipage mobile (60) présentant :
- au moins une partie ferromagnétique (80) en regard et à distance d'entrefer de l'électroaimant,
- au moins un doigt de guidage traversant la lumière de guidage (47.1) pour guider en translation axiale et solidariser en rotation l'équipage mobile (60) par rapport à l'ensemble tournant, de sorte que l'équipage mobile soit mobile axialement en translation par rapport à l'ensemble tournant entre une position d'accouplement et une position désaccouplée, et
- au moins une deuxième surface de contact (72) coopérant avec la première surface de contact (70) en position d'accouplement pour solidariser en rotation la bague extérieure et l'équipage mobile ferromagnétique, la deuxième surface de contact (72) et la partie ferromagnétique étant situées axialement de part et d'autre de la lumière.

2. Mécanisme selon la revendication 1, **caractérisé en ce que** l'ensemble tournant comporte un arbre (18), les chemins de roulement intérieur et extérieur étant entièrement situés entre un premier et un deuxième plans de référence (P1, P2) perpendiculaires à l'axe de rotation, le premier et le deuxième plans de référence étant situés entre une extrémité de l'arbre et la première surface de contact.

3. Mécanisme selon la revendication 2, **caractérisé en ce que** l'ensemble tournant comporte une bague intérieure (46) rapportée sur l'arbre (18) et formant le chemin de roulement intérieur (52).

4. Mécanisme selon l'une quelconque des revendications 1 à 3, **caractérisé en ce qu'**il comporte en outre un palier (28) coaxial avec l'axe de rotation et présentant au moins un chemin de roulement fixe (34, 36), un chemin de roulement tournant (38, 40) et des corps roulants (42) cheminant sur les chemins de roulement tournant et fixe, le chemin de roulement fixe (38, 40) étant solidarisable à un bâti (22) et le chemin de roulement tournant étant solidaire de l'organe intérieur ou de la bague extérieure (12).

5. Mécanisme selon la revendication 4, **caractérisé en ce que** le palier (28) constitue l'unique liaison de guidage en rotation du mécanisme (10) par rapport au bâti (22).

6. Mécanisme selon la revendication 4 ou la revendication 5, **caractérisé en ce que** le palier (28) est situé axialement entre l'extrémité de l'arbre et le roulement (44), entre le premier et le deuxième plans de référence (P1, P2).

7. Mécanisme selon l'une quelconque des revendications 4 à 6, **caractérisé en ce que** l'électroaimant (62) est solidaire du bâti (22).

8. Mécanisme selon l'une quelconque des revendications 4 à 7, **caractérisé en ce que** le chemin de roulement tournant (38, 40) est solidaire de la bague extérieure (12) et situé radialement à l'extérieur du chemin de roulement fixe (34, 36).

9. Mécanisme selon l'une quelconque des revendications 4 à 8, **caractérisé en ce que** le bâti (22) forme un canon creux (24) traversé par l'arbre (18), le chemin de roulement fixe (34, 36) étant formé sur le canon (24) ou sur une bague fixe (32) rapportée sur le canon (24).

10. Mécanisme selon la revendication 9, **caractérisé en ce qu'**il comporte en outre une garniture d'étanchéité (26) entre le canon (24) et l'arbre (18), située axialement entre l'extrémité de l'arbre et l'électroaimant (62).

11. Mécanisme selon l'une quelconque des revendications précédentes, **caractérisé en ce que** l'embrayage à commande électromagnétique (60) comporte un ressort de rappel (64) de l'équipage mobile ferromagnétique (56) en position d'accouplement.

12. Mécanisme selon l'une quelconque des revendications précédentes, **caractérisé en ce qu'**il comporte en outre un tambour de poulie présentant une surface d'enroulement pour coopérer avec une courroie de transmission, la surface d'enroulement étant située entre les premier et deuxième plans de référence, le tambour de poulie faisant partie intégrante de la bague extérieure ou étant fixé à la bague extérieure (48).

13. Mécanisme selon la revendication 12 et l'une quelconque des revendications 4 à 8, **caractérisé en ce que** le chemin de roulement tournant (38, 40) est formé directement sur le tambour (12).

14. Mécanisme selon la revendication 12 ou la revendication 13, **caractérisé en ce que** la première surface de contact (70) est formée sur le tambour (12).

15. Mécanisme selon l'une quelconque des revendications précédentes, **caractérisé en ce que** l'électroaimant est disposé radialement à l'intérieur du chemin de roulement intérieur.
